(19) Europäisches Patentamt / European Patent Office / Office européen des brevets

(11) **EP 2 631 148 B1**

(12) **FASCICULE DE BREVET EUROPEEN**

(45) Date de publication et mention
de la délivrance du brevet:
**28.06.2017 Bulletin 2017/26**

(51) Int Cl.:
*G01P 3/64* *(2006.01)*          *G01P 3/66* *(2006.01)*
*B61B 12/00* *(2006.01)*        *B61B 3/00* *(2006.01)*

(21) Numéro de dépôt: **13354006.2**

(22) Date de dépôt: **08.02.2013**

(54) **DIspositif et procédé de mesure de la vitesse d'un câble de traction d'un télépérique, notamment un télésiège ou télécabine**

Vorrichtung und Verfahren zur Geschwindigkeitsmessung eines Zugkabels einer Seilbahn, insbesondere eines Sessellift oder einer Gondelbahn

Device and method for measuring the speed of a traction rope of an aerial cableway, in particular a chair-lift or cable-car

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.02.2012 FR 1200517**

(43) Date de publication de la demande:
**28.08.2013 Bulletin 2013/35**

(73) Titulaire: **POMA**
**38340 Voreppe (FR)**

(72) Inventeur: **Bertolami, Olivier**
**38100 Grenoble (FR)**

(74) Mandataire: **Hecké, Gérard et al**
**Cabinet Hecké**
**10, rue d'Arménie - Europole**
**BP 1537**
**38025 Grenoble Cedex 1 (FR)**

(56) Documents cités:
**EP-A1- 0 355 994     CH-A5- 588 703**
**FR-A- 1 549 170     US-B2- 7 889 327**

## Description

### Domaine technique de l'invention

L'invention concerne les mesures de la vitesse d'un câble de traction d'un téléphérique, notamment un télésiège ou télécabine.

### État de la technique

Actuellement, les câbles aériens des téléphériques, tels des remontées mécaniques du type télésiège ou télécabine, sont entraînés par une poulie motrice mise en mouvement par un moteur d'entraînement. Afin de mesurer la vitesse du câble, on mesure la vitesse de rotation de la poulie motrice, ou d'un galet pour le guidage du câble, à l'aide d'un capteur de vitesse de rotation, du type codeur ou tachymètre. Mais cette mesure n'est pas assez précise car le câble peut glisser sur la poulie. Par ailleurs, ces types de capteurs sont sujets à l'usure et à la dilatation thermique. L'imprécision sur la vitesse du câble peut conduire à des écarts de vitesse de câble, de cadencement des véhicules tractés et à des arrêts.

On peut citer le brevet Français FR 1 549 170 qui décrit un dispositif de détection de marquage d'un câble d'acier, les marques portées par le câble étant constituées par des zones aimantées. Mais le dispositif ne permet pas de calculer la vitesse d'un câble, celle-ci étant connue et supposée constante.

On peut en outre citer la demande de brevet européen EP 0 355 994 qui divulgue un appareil pour mesurer la vitesse de déplacement d'un câble comportant des charges électrostatiques induites sur la surface du câble. L'appareil comporte des premier et deuxième capteurs de charges électrostatiques adaptés pour générer chacun un signal électrique dont l'amplitude représente la quantité de charges électrostatiques sur la surface. Mais il n'est pas adapté pour mesurer la vitesse d'un câble enrobé d'un revêtement non métallique.

### Objet de l'invention

L'objet de l'invention consiste à remédier à ces inconvénients, et plus particulièrement à fournir un dispositif de mesure de vitesse d'un câble de traction d'un téléphérique qui soit suffisamment précis et simple d'utilisation, notamment pour offrir une sécurité et une fiabilité améliorée du transport des personnes.

Selon un aspect de l'invention, il est proposé un téléphérique, notamment un télésiège ou télécabine, comprenant un dispositif de mesure de la vitesse d'un câble de traction du téléphérique, le câble comportant des repères, et le dispositif comprenant des premier et deuxième capteurs configurés pour transmettre respectivement des premier et deuxième signaux d'information de présence des repères, le deuxième capteur étant situé à une distance de référence du premier capteur, un premier moyen de détermination configuré pour déterminer un déphasage entre les premier et deuxième signaux d'information et un deuxième moyen de détermination pour déterminer une information de vitesse du câble à partir du déphasage déterminé et de la distance de référence, caractérisé en ce que les premier et deuxième capteurs sont des capteurs de distance capacitifs configurés pour transmettre, chacun, un signal d'information de la distance entre les repères du câble et ledit capteur.

Ainsi, on mesure la vitesse au plus près du câble pour une meilleure précision. Un tel dispositif de mesure est simple d'utilisation et nécessite peu de réglages et un nombre d'étapes de calibration réduit.

Les capteurs capacitifs présentent l'avantage de pouvoir détecter la présence de tous types d'objets car ils sont sensibles aux métaux et aux non-métaux. De tels capteurs sont particulièrement adaptés pour des câbles métalliques ayant un revêtement non métallique.

La distance de référence peut être strictement inférieure à la plus petite distance séparant deux repères du câble.

Ainsi, la mesure de la vitesse n'est pas perturbée par une élongation éventuelle du câble, résultant des forces de tractions appliquées au câble et aux effets de la température, qui pourrait entrainer un allongement de la distance entre deux repères du câble.

Le câble comporte plusieurs brins assemblés pour former plusieurs torons, les torons étant enroulés en hélice pour former des sillons correspondant aux repères du câble et disposés entre deux torons successifs du câble.

La structure en hélice du câble forme naturellement des repères (sillons) sur le câble et permet de s'affranchir d'apposer des repères supplémentaires sur le câble.

Selon un autre aspect de l'invention, il est proposé un procédé de mesure de la vitesse d'un câble de traction d'un téléphérique, notamment un télésiège ou télécabine, le câble comportant des repères, et le procédé comprenant des première et deuxième signalisations de présence des repères, la deuxième signalisation étant effectuée à une distance de référence de la première signalisation, une détermination d'un déphasage entre les première et deuxième signalisations et une détermination d'une information de vitesse du câble à partir du déphasage déterminé et de la distance de référence, caractérisé en ce que les première et deuxième signalisations comprennent respectivement des premier et deuxième capteurs de distance capacitifs configurés pour transmettre, chacun, un signal d'information de la distance entre les repères du câble et ledit capteur.

### Description sommaire des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :

- la figure 1, illustre schématiquement un dispositif de mesure de la vitesse d'un câble de traction d'un téléphérique selon l'invention ; et
- la figure 2, illustre schématiquement les principales étapes d'un procédé de mesure de la vitesse d'un câble de traction d'un téléphérique selon l'invention.

**Description détaillée**

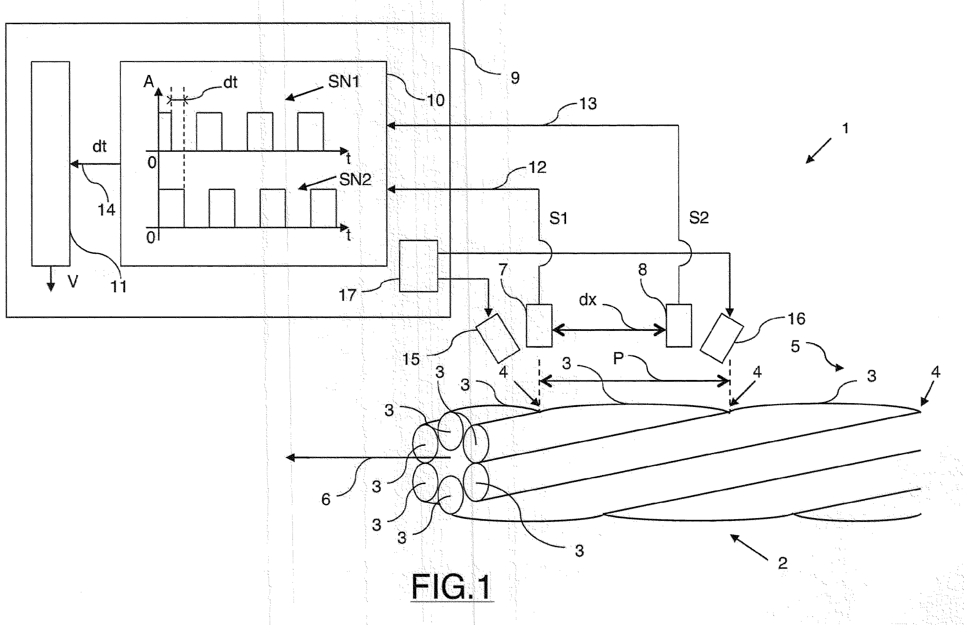

Sur la figure 1, on a représenté un dispositif 1 de mesure d'une information de vitesse V d'un câble de traction 2 d'un téléphérique.

De manière classique, dans une installation de remontée mécanique, le câble 2 auquel sont attachés les véhicules (cabines, sièges, funiculaire) transportant les passagers est entraîné par une poulie motrice logée dans une station et mise en mouvement par un moteur d'entraînement de type électrique, non représentés ici à des fins de simplification. En particulier, le câble 2 est métallique et fortement résistant à la traction. Le câble 2 peut éventuellement être recouvert, partiellement ou en totalité, par un revêtement de protection en matière non métallique, par exemple en matière plastique.

Le câble 2 comporte, généralement, plusieurs brins enroulés en hélice. Un ensemble de brins enroulés en hélice forme un toron 3, et le câble 2 peut en outre comporter plusieurs torons 3 qui sont également enroulés en hélice pour une meilleure résistance à la traction. On a représenté, sur la figure 1, un câble 2 comprenant, par exemple, six torons 3 enroulés en hélice. Les torons 3 enroulés en hélice forment des sillons 4, de sorte que chaque sillon 4 est situé entre deux torons 3 successifs du câble 2. On peut noter que dans une configuration en hélice, les torons 3 et les sillons 4 sont situés alternativement le long du câble 2 et forment des repères 5 à la surface du câble 2. En outre, le câble 2 comporte un pas P correspondant à la distance entre deux repères 5 successifs du câble, par exemple la distance entre deux sillons 4 successifs ou encore entre deux torons 3 successifs. On a également représenté un axe longitudinal 6 le long duquel se déplace le câble 2, en marche avant ou en marche arrière.

Par ailleurs, le dispositif de mesure 1 comporte des premier et deuxième capteurs 7, 8, et un bloc de mesure 9. Le bloc de mesure 9 comprend un premier moyen de détermination 10 pour déterminer un déphasage dt entre deux signaux et un deuxième moyen de détermination 11 pour déterminer l'information de vitesse V du câble 2. Le bloc de mesure 9 peut être, par exemple, un microprocesseur intégré dans un ordinateur ou un automate programmable.

De manière générale, les capteurs 7, 8 sont des capteurs de présence des repères 5 du câble 2. Le premier capteur 7 transmet un premier signal S1 d'information de présence d'un repère 5 du câble 2 en direction du premier moyen de détermination 10, par l'intermédiaire d'une connexion 12. Le deuxième capteur 8 transmet un deuxième signal S2 d'information de présence d'un repère 5 du câble 2 en direction du premier moyen de détermination 10, par l'intermédiaire d'une connexion 13. Lorsque le câble 2 est en mouvement, les repères 5 défilent face aux capteurs 7, 8, ainsi chaque signal S1, S2 émis par un capteur 7, 8, comporte une amplitude qui varie selon que le repère est détecté ou non par le capteur. Par exemple, l'amplitude du signal est maximum lorsque le repère est détecté, et minimum sinon. En outre, le deuxième capteur 8 est situé à une distance de référence dx du premier capteur 7. Le premier moyen de détermination 10 reçoit les deux signaux S1 et S2 et calcule leur déphasage dt, qu'il transmet au deuxième moyen de détermination 11 par une connexion 14. Le deuxième moyen de détermination 11 détermine ensuite une vitesse V du câble 2, préférentiellement une vitesse V d'un déplacement longitudinal du câble 2, à partir du déphasage dt et de la distance de référence dx. Par ailleurs, la distance de référence dx est strictement inférieure à la plus petite distance qui sépare deux repères 5 du câble 2. Ainsi, il n'est pas nécessaire que les repères du câble soient régulièrement espacés sur le câble 2 pour mesurer la vitesse V du câble 2. Selon le mode de réalisation illustré à la figure 1, la plus petite distance qui sépare deux repères 5 du câble 2 est égale au pas P du câble 2. En outre, la distance de référence dx reste inférieure au pas P, même en cas d'élongation du câble 2.

Le déphasage dt correspond au temps qu'un repère 5 du câble 2, par exemple un sillon 4, ou un toron 3, a mis pour parcourir la distance de référence dx. Le deuxième moyen de détermination 11 détermine la vitesse longitudinale V du câble 2 selon l'équation suivante :

$$V = dx/dt$$

avec

V : la vitesse du câble 2 ;
dx : la distance de référence entre les premier et deuxième capteurs 7, 8; et
dt : le déphasage entre les premier et deuxième signaux S1,S2.

Le deuxième moyen de traitement 11 est en outre configuré pour déterminer le sens de déplacement du câble, en marche avant ou en marche arrière, en fonction du signe du déphasage dt.

Afin de détecter le passage d'un repère 5 du câble, on peut utiliser différents types de capteurs. Par exemple les capteurs peuvent être numériques ou analogiques. Les capteurs numériques transmettent des signaux S1, S2 numériques vers le premier moyen de détermination 10. Dans ce cas, le premier moyen de détermination comprend des moyens de synchronisation pour synchroniser les signaux S1, S2 de façon qu'ils aient la même fréquence avant de calculer leur déphasage dt.

Ainsi, on améliore la précision sur le calcule du déphasage des signaux S1, S2.

Les capteurs 7, 8 peuvent également être des capteurs analogiques qui transmettent des signaux S1, S2 analogiques vers le premier moyen de détermination 10. Dans ce cas, le premier moyen de détermination 10 comprend des convertisseurs analogique/numérique pour convertir les premier et deuxième signaux analogiques en deux signaux numériques, respectivement référencés SN1 et SN2, et calcule le déphasage dt entre les deux signaux numériques SN1, SN2. Les convertisseurs analogique/numérique sont de préférence couplés à un générateur d'un signal d'horloge de manière à synchroniser les signaux numériques SN1, SN2. En particulier, la synchronisation des signaux numériques SN1, SN2 permet de générés deux signaux SN1, SN2 qui ont la même fréquence. On a représenté sur la figure 1, les amplitudes A ses signaux numériques SN1, SN2 en fonction du temps t. On peut noter que chaque signal numérique SN1, SN2 comporte un niveau haut lorsqu'un repère est présent en regard du capteur associé, et un niveau bas sinon.

Selon un exemple utile à la compréhension de l'invention, les capteurs 7, 8 sont des capteurs de distance analogiques inductifs. Par exemple, le câble 2 est de nature métallique et les capteurs 7, 8 sont des capteurs de distance analogiques inductifs à courants de Foucault. Dans ce cas, les capteurs 7, 8 produisent un champ électromagnétique oscillant, et lorsque la surface métallique du câble 2 pénètre ce champ, ce dernier est atténué. Le signal d'information de présence délivré par les capteurs 7, 8 peut être une tension électrique dont la valeur varie en fonction de la position relative du repère 5 vis-à-vis du capteur, c'est-à-dire en fonction de la distance de la surface du repère 5 par rapport au capteur 7, 8. Par ailleurs, de tels capteurs 7, 8 sont sans contact car l'interaction entre le câble et le capteur est réalisée par l'intermédiaire du champ électromagnétique oscillant. Le capteur analogique délivre un signal qui a un niveau haut lorsque le câble est proche du capteur, et un niveau bas sinon. L'avantage de tels capteurs 7, 8 est de pouvoir détecter la présence de tout objet métallique et sont particulièrement adaptés aux câbles de traction 2 d'un téléphérique qui comportent des torons 3 enroulés en hélices. En variante, on peut disposer des repères supplémentaires métalliques à la surface du câble 2 qui sont différents des sillons 4 ou torons 3.

Selon un autre exemple utile à la compréhension de l'invention, le câble 2 est de nature ferromagnétique et les capteurs 7, 8 sont des capteurs de distance analogiques inductifs à reluctance variable. L'ensemble capteur 7, 8 câble 2 forme un circuit magnétique, et la distance entre la surface du câble 2 et le capteur 7, 8 détermine la reluctance du circuit magnétique. Dans ce cas, les signaux délivrés ont également des niveaux qui varient en fonction de la distance entre la surface des repères 5 ferromagnétiques du câble 2 et le capteur 7, 8.

Selon un mode de réalisation de l'invention, les capteurs 7, 8 sont des capteurs de distance analogiques capacitifs. La tête de mesure de tels capteurs est formée d'un conducteur cylindrique et d'une enveloppe métallique réalisant un condensateur ayant une capacité de référence.

Lorsque les repères 5 du câble 2 s'approchent de l'extrémité de la tête des capteurs 7, 8, la capacité de référence varie et le signal délivré par le capteur diminue. De tels capteurs sont particulièrement adaptés pour mesurer la vitesse d'un câble enrobé d'un revêtement non métallique, par exemple un revêtement en matière plastique. Dans ce mode de réalisation, les repères peuvent être des ergots situés à la surface du revêtement. Il n'est pas non plus nécessaire que les repères soient régulièrement espacés à la surface du câble 2.

Selon encore un autre exemple utile à la compréhension de l'invention, les capteurs 7, 8 peuvent être des systèmes d'acquisition d'images, par exemple des caméras numériques miniaturisées, configurés pour capturer des images de la surface du câble 2. Dans ce mode de réalisation, le dispositif de mesure 1 comporte au moins un système d'éclairage 15, 16 associés aux deux capteurs 7, 8, ou encore un système d'éclairage par capteur. Les systèmes d'éclairages 15, 16 sont commandés par des moyens de commandes 17, de préférence inclus dans le bloc de mesure 9. Chaque système d'éclairage 15, 16 peut comprendre une ou plusieurs diodes électroluminescentes pour éclairer une surface du câble 2 afin de permettre aux capteurs 7, 8 d'acquérir des images de la surface et de les transmettre, par l'intermédiaire des premier et deuxième signaux S1, S2, numériques ou analogiques, au premier moyen de détermination 10. Le premier moyen de détermination 10 comporte en outre des moyens de traitement des images numériques, par exemple un processeur de signaux numériques muni d'outils logiciels pour la reconnaissance d'objets au sein d'une image. Les moyens de traitement des images reconnaissent la présence, ou non, des repères 5 dans l'image et génèrent respectivement deux signaux numériques SN1, SN2 ayant un niveau haut, lorsque le repère est reconnu dans l'image, et un niveau bas sinon. Dans ce mode de réalisation, les repères peuvent être une marque apposée en surface du câble 2, par exemple une marque réalisée à l'aide d'une peinture réfléchissante.

On peut avantageusement utiliser deux capteurs 7, 8 du même type, pour une meilleure précision de la mesure. On peut également envisager d'utiliser une combinaison de capteurs de types différents.

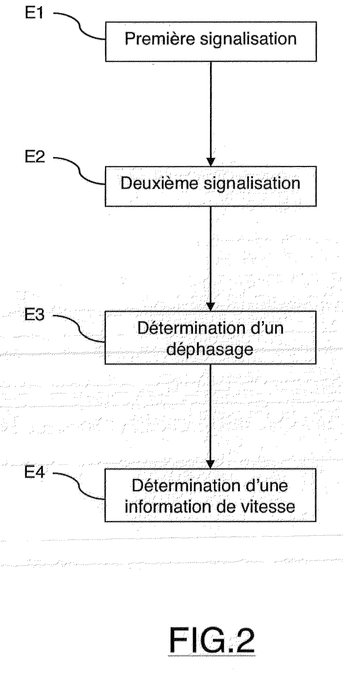

Sur la figure 2, on a représenté les principales étapes d'un procédé de mesure de la vitesse d'un câble de traction d'un téléphérique. Ce procédé peut être mis en oeuvre par le dispositif 1 de mesure défini ci-avant. Le câble comporte des repères, par exemple des sillons séparant deux torons successifs du câble, ou autres. Le procédé comprend une première étape E1 dans laquelle on effectue une première signalisation pour signaler la présence des repères du câble à un premier point de passage du câble, puis une deuxième étape E2 dans laquelle on effectue une deuxième signalisation pour signaler la présence des repères du câble à un deuxième point de passage du câble distant d'une distance de référence dx du premier point de passage. Puis on détermine à une troisième étape E3 un déphasage entre les deux signalisations précédentes, et on détermine à une quatrième étape E4 une information de la vitesse V du câble à partir du déphasage déterminé et de la distance de référence.

## Revendications

1. Téléphérique, notamment un télésiège ou télécabine, comprenant un câble de traction (2) comportant plusieurs brins assemblés pour former plusieurs torons (3), les torons (3) étant enroulés en hélice pour former des sillons (4) correspondant aux repères (5) du câble (2) et disposés entre deux torons (3) successifs du câble (2), le téléphérique comprenant un dispositif de mesure de la vitesse du câble de traction (2) comprenant des premier et deuxième capteurs (7, 8) configurés pour transmettre respectivement des premier et deuxième signaux (S1, S2) d'information de présence des repères, le deuxième capteur (8) étant situé à une distance de référence (dx) du premier capteur (7), un premier moyen de détermination (10) configuré pour déterminer un déphasage (dt) entre les premier et deuxième signaux (S1, S2) d'information et un deuxième moyen de détermination (11) pour déterminer une information de vitesse (V) du câble (2) à partir du déphasage (dt) déterminé et de la distance de référence (dx), **caractérisé en ce que** les premier et deuxième capteurs (7, 8) sont des capteurs de distance capacitifs configurés pour transmettre, chacun, un signal (S1, S2) d'information de la distance entre les repères (5) du câble (2) et ledit capteur (7, 8).

2. Téléphérique selon la revendication 1, dans lequel la distance de référence (dx) est strictement inférieure à la plus petite distance séparant deux repères (5) du câble (2).

3. Procédé de mesure de la vitesse d'un câble de traction d'un téléphérique, notamment un télésiège ou télécabine, le câble comportant des repères, et le procédé comprenant des première et deuxième signalisations (E1, E2) de présence des repères, la deuxième signalisation (E2) étant effectuée à une distance de référence de la première signalisation (E1), une détermination (E3) d'un déphasage entre les première et deuxième signalisations et une détermination (E4) d'une information de vitesse du câble à partir du déphasage déterminé et de la distance de référence, **caractérisé en ce que** le câble comporte plusieurs brins assemblés pour former plusieurs torons, les torons étant enroulés en hélice pour former des sillons correspondant à des repères du câble et disposés entre deux torons successifs du câble, et **en ce que** les première et deuxième signalisations (E1, E2) comprennent respectivement des premier et deuxième capteurs (7, 8) de distance capacitifs configurés pour transmettre, chacun, un signal (S1, S2) d'information de la distance entre les repères (5) du câble (2) et ledit capteur (7, 8).

## Patentansprüche

1. Seilbahn, insbesondere eine Sessel- oder Kabinenbahn, die ein Zugseil (2) umfasst, das eine Mehrzahl vereinter Drähte umfasst, die mehrere Litzen (3) bilden, wobei die Litzen (3) schneckenförmig verdreht sind und so Kerben (4) bilden, die den Markierungen (5) des Seils (2) entsprechen und zwischen zwei aufeinanderfolgenden Litzen (3) des Seils (2) angeordnet sind, wobei die Seilbahn eine Vorrichtung zum Messen der Geschwindigkeit des Zugseils (2) umfasst, die jeweils einen ersten und zweiten Sensor (7, 8) umfasst, die so vorgesehen sind, dass sie jeweils ein erstes und ein zweites Signal (S1, S2) übertragen, das Informationen zum Vorhandensein der Markierungen übermittelt, wobei der zweite Sensor (8) in einem Referenzabstand (dx) vom ersten Sensor (7) angeordnet ist, eine erste Bestimmungsvorrichtung (10), die vorgesehen ist, eine Phasenverschiebung (dt) zwischen dem ersten und zweiten Informationssignal (S1, S2) zu bestimmen, und eine zweite Bestimmungsvorrichtung (11) zur Bestimmung einer Information betreffend die Geschwindigkeit (V) des Seils (2) auf der Grundlage der bestimmten Phasenverschiebung (dt) und des Referenzabstands (dx), **dadurch gekennzeichnet, dass** der erste und zweite Sensor (7, 8) kapazitive Abstandssensoren sind, die so vorgesehen sind, dass sie jeweils ein Informationssignal (S1, S2) übertragen, das den Abstand zwischen den Markierungen (5) des Seils (2) und dem genannten Sensor (7, 8) enthält.

2. Seilbahn nach Anspruch 1, bei der der Referenzabstand (dx) auf jeden Fall geringer ist als der kleinste Abstand zwischen zwei Markierungen (5) des Seils (2).

3. Verfahren zum Messen der Geschwindigkeit eines Zugseils einer Seilbahn, insbesondere einer Sessel- oder Kabinenbahn, wobei das Seil Markierungen aufweist, und wobei das Verfahren eine erste und zweite Anzeige (E1, E2) des Vorhandenseins der Markierungen umfasst, wobei die zweite Anzeige (E2) in einem Referenzabstand von der ersten Anzeige (E1) erfolgt, eine Bestimmung (E3) einer Phasenverschiebung zwischen der ersten und zweiten Anzeige und eine Bestimmung (E4) einer Seilgeschwindigkeitsinformation auf der Grundlage der festgestellten Phasenverschiebung und des Referenzabstands, **dadurch gekennzeichnet, dass** das Seil eine Mehrzahl vereinter Drähte umfasst, die mehrere Litzen bilden, wobei die Litzen schneckenförmig verdreht sind und so Kerben bilden, die den Markierungen des Seils entsprechen und sich zwischen zwei aufeinanderfolgenden Litzen des Seils befinden, sowie dadurch, dass erste und zweite Anzeige (E1, E2) jeweils einen ersten und einen zweiten kapazitiven Abstandssensor (7, 8) umfassen, die so vorgesehen sind, dass sie jeweils ein Signal (S1, S2) mit der Information zum Abstand zwischen den Markierungen (5) des Seils (2) und dem genannten Sensor (7, 8) übertragen.

**Claims**

1. Cableway, in particular a chair-lift or a cable car, comprising a haulage cable (2) having several wires assembled so as to form several strands (3), the strands (3) being helically twined so as to form grooves (4) corresponding to marks (5) on the haulage cable (2) and arranged between two successive strands (3), the cableway comprising a device for measuring the speed of the haulage cable (2), including first and second sensors (7, 8) configured to transmit respectively first and second information signals (S1, S2) relative to the presence of the marks, the second sensor (8) being located at a reference distance (dx) from the first sensor (7), a first determination means (10) configured to determine a phase shift (dt) between the first and second information signals (S1, S2) and a second determination means (11) for determining a speed information (V) of the haulage cable (2) from the determined phase shift (dt) and the reference distance (dx), **characterized in that** the first and second sensors (7, 8) are capacitive distance sensors, each of them being configured to transmit an information signal (S1, S2) relative to the distance between the marks (5) on the haulage cable (2) and said sensor (7, 8).

2. Cableway according to claim 1, wherein the reference distance (dx) is strictly lower than the smallest distance separating two marks (5) on the haulage cable (2).

3. Method for measuring the speed of a haulage cable of a cableway, in particular a chairlift or a cable car, the haulage cable including marks, and the method including first and second signalings (E1, E2) for the presence of the marks, the second signaling (E2) being performed at a reference distance from the first signaling (E1), a determination (E3) of a phase shift between the first and second signalings and a determination (E4) of a speed information of the haulage cable from the determined phase shift and the reference distance, **characterized in that** the haulage cable comprises several wires assembled so as to form several strands, the strands being helically twined so as to form grooves corresponding to marks on the haulage cable and arranged between two successive strands, and **in that** the first and second signalings (E1, E2) include respectively first and second capacitive distance sensors (7, 8), each of them being configured to transmit an information signal (S1, S2) relative to the distance between the marks (5) of the haulage cable (2) and said sensor (7, 8).

FIG.1

**FIG.2**

**EP 2 631 148 B1**

## RÉFÉRENCES CITÉES DANS LA DESCRIPTION

### Documents brevets cités dans la description

- FR 1549170
- EP 0355994 A